# EUROPÄISCHE PATENTSCHRIFT

(11) **EP 0 718 527 B1**
(45) Veröffentlichungstag und Bekanntmachung des Hinweises auf die Patenterteilung: **22.12.1999**
(21) Anmeldenummer: 95115001.0
(22) Anmeldetag: 23.09.1995
(51) Int. Cl.: F16H 59/02

(54) **Schalteinrichtung für ein Kraftfahrzeug mit einem automatischen Getriebe**
Shift control device for a vehicle with an automatic transmission
Dispositif de commande pour transmission automatique de véhicule automobile

(30) Priorität: 22.12.1994 DE 4446079
(43) Veröffentlichungstag der Anmeldung: 26.06.1996
(73) Patentinhaber: Bayerische Motoren Werke Aktiengesellschaft, 80788 München (DE)
(72) Erfinder: Neuner, Josef, D-83064 Raubling (DE)

(56) Entgegenhaltungen:
- EP-A- 0 467 773
- EP-A- 0 624 741
- EP-A- 0 736 408
- DE-A- 4 005 588
- DE-A- 4 217 773
- US-A- 4 370 897

## Beschreibung

Die Erfindung bezieht sich auf eine Schalteinrichtung für ein Kraftfahrzeug mit einem automatischen Getriebe nach dem Oberbegriff des Hauptanspruchs.

Ein bekanntes Getriebe zeigt die DE 37 17 675 C2. In dieser Vorveröffentlichung läßt sich der Wählhebel des automatischen Getriebes einmal normal in der Automatikschaltgasse bewegen, das heißt er kann von P über R und N zur Schaltposition D geschwenkt werden. Desweiteren läßt er sich in der Schaltposition D in eine zweite manuelle Schaltgasse verschwenken, die in etwa parallel zur Automatikschaltgasse verläuft. In der zweiten Schaltgasse kann durch Antippen des Schalters das Getriebe schrittweise um je einen Gang hoch- bzw. zurückgeschaltet werden.

Das Verschwenken von der einen in die andere Schaltgasse erfordert einen relativ hohen Bauaufwand, da der Wählhebel sowohl in Längsrichtung als auch in Querrichtung drehbar gelagert sein muß.

Die gattungsgemäße DE 40 05 588 A1 geht einen anderen Weg. Die Automatikschaltgasse ist hier in einer bevorzugten Ausführungsform um eine Fahrstufe "M" verlängert. Befindet sich der Wählhebel in dieser Fahrstufe können die einzelnen Gänge durch einen am Wahlhebel angeordneten Wippschalter schrittweise hoch- bzw. rückgeschaltet werden. In der Vorveröffentlichung ist jedoch nichts Näheres über den Wechsel des Wählhebels zwischen der "D"- und dieser "M"-Stellung ausgesagt.

Aufgabe der Erfindung ist es daher, bei einem gattungsgemäßen automatischen Getriebe sowohl ein automatisches Schalten als auch ein manuelles schrittweises Schalten der Getriebegänge zuzulassen, ohne dabei den Wählhebel in aufwendiger Weise in zwei Richtungen drehbar lagern zu müssen. Dabei soll der Übergang von des Wählhebels von dem Automatikschaltbetrieb in den manuellen Schaltbetrieb in deutlicher Weise erfolgen.

Die Aufgabe wird erfindungsgemäß gelöst mit den kennzeichnenden Merkmalen des Hauptanspruchs. Weitere vorteilhafte Ausgestaltungen der Erfindung ergeben sich aus den Unteransprüchen.

Nach der Erfindung wird also die Automatikschaltgasse verlängert und in dem verlängerten Teil die Schaltposition für das manuelle Schalten des Getriebes untergebracht. Um nicht unbeabsichtigt vom automatischen Betrieb in die manuelle Schaltposition zu gelangen, ist es zweckmäßig dies mit einem Anschlag zu verhindern. Erst durch das bewußte Überwinden des Anschlags, in einer vorteilhaften Ausführung der Erfindung geschieht dies durch Niederdrücken des Wählhebels, kann der Fahrer den Wählhebel in die manuelle Schaltposition bewegen.

In der manuellen Schaltposition ist es andererseits ebenfalls wünschenswert, eine Sperre zum automatischen Betrieb einzubauen, die ebenfalls nur durch bewußte Betätigung überwunden werden kann. Im einfachsten Falle ist hier wiederum ein Anschlag vorgesehen.

Schließlich sollte sichergestellt sein, daß beim Wechseln von der manuellen Schaltposition in den Automatikbetrieb der Fahrer den Wählhebel nur in die D Schaltposition bewegen kann. Es ist daher zweckmäßig, über einen weiteren Anschlag die Schwenkbewegung des Wählhebels zu begrenzen.

Bei herkömmlichem Automatikgetriebe ist der Wählhebel über einen Bowdenzug mit einer getriebeinternen Rastierung bzw. getriebeinternen Schaltgliedern verbunden. Bei der bekannten Ausführung mit zwei parallelen Schaltgassen wird der Wählhebel beim Verschwenken in die manuelle Schaltgasse vom Bowdenzug getrennt. Bei der erfindungsgemäßen Ausführung jedoch kann der Bowdenzug auch in der manuellen Schaltposition am Wählhebel verbleiben. Dadurch verringert sich ebenfalls der Bauaufwand. Desweiteren ergibt sich aus diesem Umstand der Vorteil, daß die ohnehin vorhandene, federbeaufschlagte getriebeinterne Rastierung über den Bowdenzug den Wählhebel in der manuellen Schaltposition nach jedem Antippen in eine Mittellage zurückdrängt.

In der manuellen Schaltposition werden die Gänge "elektrisch" geschalten, das heißt, der Wählhebel betätigt beim Antippen elektrische Schalter, die entsprechende Signale zum elektronischen Getriebesteuergerät weiterleiten, das dann den Schaltbefehl auslöst. Die elektrischen Schalter müssen dabei aber nicht unbedingt vom Wählhebel direkt betätigt werden. Es können hierfür ebensogut bereits vorhandene oder zusätzliche, am eigentlichen Getriebe angeordnete elektrische Schalter herangezogen werden.

Weitere vorteilhafte Ausgestaltungen der Erfindung ergeben sich aus der nachfolgenden Beschreibung eines Ausführungsbeispiels und der dazugehörigen Zeichnung. Es zeigen:
- Figur 1: ein Schaltschema eines automatischen Getriebes nach der Erfindung und
- Figur 2: eine Teilansicht eines Lagerbockes mit darin gelagertem Wählhebel, der sich entsprechend dem Schaltschema nach Figur 1 bewegen läßt.

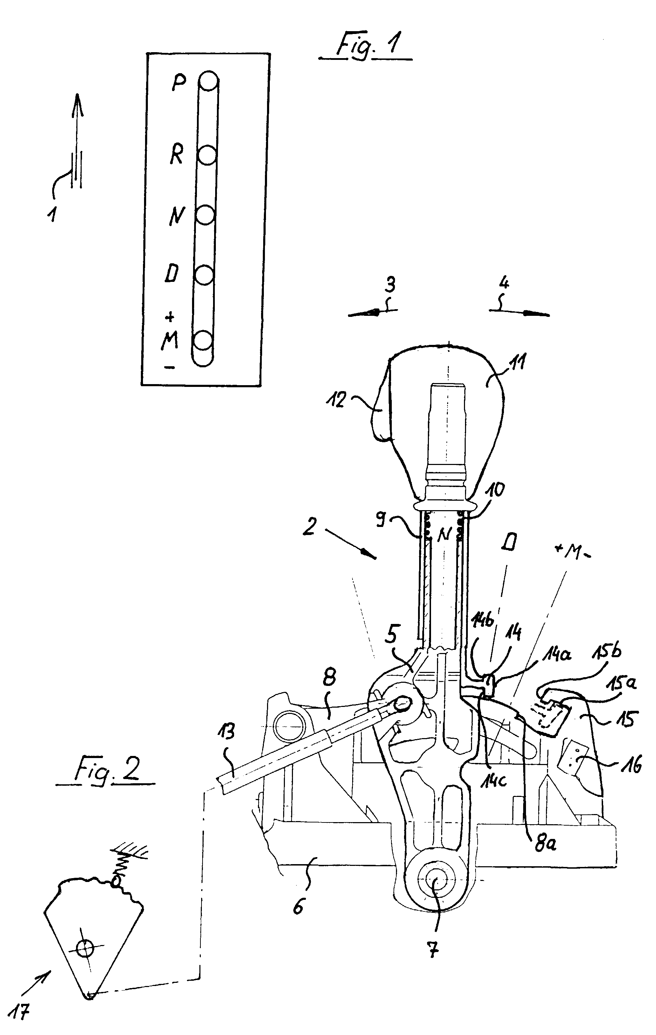

Nach dem Schaltschema der Figur 1, das die eigentliche Schaltgasse eines automatischen Getriebes für ein Kraftfahrzeug symbolisieren soll, läßt sich der Wählhebel im wesentlichen in Fahrzeuglängsrichtung in die einzelnen Schaltpositionen P, R, N, D und darüber hinaus nach M verschwenken. Die Fahrzeuglängsrichtung bzw. die Fahrtrichtung ist durch einen Pfeil 1 dargestellt.

Die Schaltposition P entspricht der Parkposition, in der der Wählhebel bei abgestelltem Fahrzeug steht. In der Schaltposition R ist der Rückwärtsgang eingelegt, während N die neutrale Schaltposition angibt. In der Schaltposition D schaltet das Getriebe automatisch die einzelnen Vorwärtsgänge entsprechend den jeweiligen Fahrbedingungen.

Der Wechsel in die Schaltposition M, die ein manuelles schrittweises Schalten der einzelnen Vorwärtsgänge erlaubt, ist nur aus der Schaltposition D möglich. Befindet sich der Wählhebel in der Schaltposition M, kann der Fahrer durch Antippen des Wählhebels in Fahrtrichtung um einen Gang hochschalten und entsprechend bei entgegengesetztem Antippen um einen Gang zurückschalten. Dies wird durch "+" und "-" der Schaltposition M im Schaltschema nach Figur 1 verdeutlicht.

Eine zweckmäßige konstruktive Lösung, mit dem dies erreicht werden kann, zeigt die Figur 2. Es ist ein insgesamt mit 2 bezeichneter Wählhebel erkennbar, der in Richtung der Pfeile 3 und 4 hin und her bewegt werden kann. Die Pfeile 3 und 4 symbolisieren dabei die Fahrzeuglängsrichtung. Der Wählhebel 2 selbst besteht aus einem Schwenkarm 5, der an seinem unteren Ende an einem fahrzeugfesten Schaltbock 6 gelagert ist. Die Drehachse ist in der Figur 2 mit 7 gekennzeichnet.

Am gegenüberliegenden, nach oben ragenden Ende ist über den Schwenkarm 5 eine Hülse 9 geschoben, die sich über eine Feder 10 gegen das obere Ende des Schwenkarms 5 abstützt. Mit der Hülse 9 ist ein Schaltknauf 11 verbunden, der eine Entriegelungstaste 12 aufweist, mit der beispielsweise der Wählhebel aus der Schaltposition P herausbewegt werden kann. Der Mechanismus ist hier jedoch nicht näher dargestellt, da er für das Verständnis der Erfindung belanglos ist.

Bei seiner Bewegung überstreicht der Schwenkarm 5 eine mit dem Schaltbock 6 fest verbundene Schaltkulisse 8. Die Schaltkulisse 8 ist an ihrer Stirnfläche mehrfach gestuft entsprechend der jeweils eingelegten Schaltposition. In der Zeichnung ist dies jedoch nicht in allen Einzelheiten erkennbar.

Schließlich ist am Schwenkarm 5 im Bereich der Schaltkulisse 8 ein Bowdenzug 13 angelenkt, mit dem der Wählschieber am Automatikgetriebe je nach Stellung des Wählhebels beaufschlagt wird. Der Bowdenzug führt dabei zu einer am eigentlichen Automatikgetriebe vorgesehenen Rastierung, die in Figur 2 insgesamt mit 17 bezeichnet ist. Die Rastierung besteht aus einem Segment, das an seiner Stirnfläche Rasten für die jeweilige Schaltposition aufweist. Eine federbelastete Kugel fixiert die gerade gewählte Schaltposition. Durch die entsprechende Ausformung der zugeordneten Kerbe und der in sie eingreifenden, federbelasteten Kugel kann der Wählhebel 3 über den Bowdenzug 13 in der weiter unten noch genauer zu beschreibenden manuellen Schaltposition nach jedem Antippen in eine Mittellage zurückgedrängt werden.

Die auf dem Schwenkarm 5 verschiebbar gehaltene Hülse 9 weist an ihrem unteren, der Schaltkulisse 8 zugewandten Ende einen T-förmigen Fortsatz 14 auf mit einer Anschlagschulter 14a sowie zwei gegenüberliegenden Anschlagflächen 14b und 14c auf dem Querbalken des T-Profils. Die Schaltkulisse 8 andererseits ist an ihrem der manuellen Fahrstufe zugeordneten Endabschnitt (15) zu einem fanghakenartigen Querschnittsprofil ausgeformt mit einer hinterschnittenen Ausnehmung 15a. Desweiteren weist der Endabschnitt 15 einen der Anschlagfläche 14a des T-förmigen Fortsatzes 14 zugekehrten Anschlag 15b auf. Schließlich ist an der Schaltkulisse 8 noch unterhalb des Endabschnittes 15 eine Anschlagschulter 8a ausgeformt.

Der Wählhebel 2 steht nach Figur 2 in der Schaltposition N. Er läßt sich von dort in Pfeilrichtung 4 in die Schaltposition D bewegen. Sobald diese Position erreicht ist, stößt die Anschlagschulter 14a gegen den Anschlag 15b. Ein weiteres Schwenken in Pfeilrichtung 4 ist somit nicht mehr möglich.

Will nun der Fahrer in die manuelle Schaltgasse wechseln, so drückt er den Schaltknopf 11 und damit die Hülse 9 und den Fortsatz 14 gegen die Kraft der Feder 10 nach unten. Die Anschlagfläche 14a bewegt sich dadurch ebenfalls nach unten bis sie außer Kontakt mit dem Anschlag 15b kommt. Der Wählhebel 2 ist nun in seiner Schwenkbewegung in Richtung des Pfeiles 4 nicht mehr blockiert und kann in die Schaltposition M geschwenkt werden. Läßt der Fahrer - dort angelangt den Schaltknopf 11 wieder los, so drückt die Feder 9 den T-förmigen Fortsatz in die Ausnehmung 15a hinein. Diese Position ist in der Figur 2 durch einen gestrichelt gezeichneten Fortsatz 14 angedeutet. Da die Länge der Ausnehmung größer ist als die Dicke des Querbalkens des T-förmigen Fortsatzes 14, läßt sich der Wählhebel nur begrenzt nach vorne bzw. nach hinten (Pfeilrichtung 3 und 4) bewegen. Nach vorne begrenzt dabei die Anschlagfläche 14b zusammen mit der vorderen Innenwand der Ausnehmung 15a die Bewegung. Nach hinten geschieht dies durch die Anschlagfläche 14a zusammen mit der hinteren Innenwandung der Ausnehmung 15a. Dieses Bewegungsspiel ist ausreichend für das Betätigen von elektrischen Schaltern 16, die am Schaltbock befestigt sind. Die Schalter geben Signale an das Getriebesteuergerät zum Hoch- bzw. Zurückschalten des Getriebes um jeweils einen Gang. In Figur 2 ist der Einfachheit halber nur ein solcher Schalter 16 dargestellt. Durch geeignete Federmittel wird der Wählhebel nach jeder Betätigung in eine Mittellage zurückgeführt.

Möchte der Fahrer aus der manuellen Fahrposition zurück in den automatischen Fahrbetrieb wechseln, so drückt er den Schaltknopf 11 wiederum nach unten. Der T-förmige Fortsatz 14 kommt Außereingriff mit der hinterschnittenen Ausnehmung 15a und der Fahrer kann den Wählhebel 2 in Pfeilrichtung 3 nach vorne bewegen. Sobald er jedoch die Schaltposition D erreicht hat, stößt der Anschlag 14c des T-förmigen Fortsatzes 14 gegen die Anschlagfläche 8a und begrenzt die Schwenkbewegung. In dieser Position ist der Wählhebel so weit verschwenkt, daß der T-förmige Fortsatz 14 jenseits des Endabschnitts 15 liegt, so daß er sich beim Loslassen des Schaltknaufs 11 nach oben am Endabschnitt 15 vorbei bewegen kann.

## Patentansprüche

1. Schalteinrichtung für ein Kraftfahrzeug mit einem automatischen Getriebe, welche einen Wählhebel (2) aufweist, der innerhalb einer im wesentlichen in Fahrzeuglängsrichtung verlaufenden Schaltgasse in die einzelnen Schaltpositionen P, R, N, D bewegbar und in eine weitere Schaltposition M überführbar ist, in der die Vorwärtsgänge des Getriebes manuell schrittweise schaltbar sind und die sich in einer Verlängerung der Schaltgasse befindet, wobei der Wählhebel entlang einer feststehenden Schaltkulisse in die einzelnen Schaltpositionen bewegbar ist, dadurch gekennzeichnet, daß die Schaltkulisse einen Anschlag (14a, 15b) für den sich in der Schaltposition D befindlichen Wählhebel (2) aufweist, wobei der Anschlag durch Bewegen des Wählhebels (2) in seiner Längsachse überwindbar ist, wodurch der Wählhebel (2) aus der Schaltposition D in die weitere Schaltposition M überführbar und aus dieser wieder rückführbar ist.

2. Schalteinrichtung nach Anspruch 1, dadurch gekennzeichnet, daß der Anschlag an einem Endabschnitt (15) der Schaltkulisse vorgesehen ist, dessen Stirnseite als eine Anschlagschulter (15b) für einen T-förmigen, am Wählhebel (2) angeordneten Fortsatz (14) dient.

3. Schalteinrichtung nach Anspruch 2, dadurch gekennzeichnet, daß der Endabschnitt (15) ein fanghakenartiges Querschnittsprofil aufweist mit einer hinterschnittenen Ausnehmung (15a), in der der T-förmige Fortsatz (14) in der Schaltposition für das manuelle Schalten auf einer begrenzten Länge in Richtung der Schaltgasse vor- und zurückbewegbar ist.

4. Schalteinrichtung nach Anspruch 3, dadurch gekennzeichnet, daß der T-förmige Fortsatz (14) in etwa senkrecht vom Wählhebel (2) absteht und mit seinem nach oben zeigenden Querbalkenabschnitt (14b) in der manuellen Schaltposition in die hinterschnittene Ausnehmung (15a) eingreift, und daß der Wählhebel (2) aus der Schaltposition D durch Niederdrücken in die manuelle Schaltposition überführbar ist und umgekehrt.

5. Schalteinrichtung nach Anspruch 4, dadurch gekennzeichnet, daß der untere Querbalkenabschnitt (14c) des T-förmigen Fortsatzes (14) mit einem als Anschlag dienenden Stufensprungs (8a) der Schaltkulisse (8) zusammenwirkt.

6. Schalteinrichtung nach einem der Ansprüche 1 bis 5, dadurch gekennzeichnet, daß der Wählhebel (2) in der manuellen Schaltposition elektrische Schalter (16) für das Einleiten des Gangwechsels betätigt.

7. Schalteinrichtung nach einem der Ansprüche 1 bis 6, dadurch gekennzeichnet, daß der Wählhebel in der manuellen Schaltposition federbeaufschlagt in eine Mittellage gedrängt wird.

8. Schalteinrichtung nach Anspruch 7, dadurch gekennzeichnet, daß eine am Automatikgetriebe angeordnete federbeaufschlagte Rastierung (17) den Wählhebel (2) in seine Mittellage zurückführt.

## Claims

1. A gearshift system for a motor vehicle with an automatic gearbox, which has a selector lever (2) which can be moved within a gearshift channel extending substantially in the longitudinal direction of the vehicle into the individual gearshift positions P, R, N, D and the further gearshift position M, in which the forward gears of the gearbox can be shifted manually in a stepwise manner and which is within an extension of the gearshift channel, wherein the selector lever can be moved along a fixed gearshift gate into the individual gearshift positions, characterised in that the gearshift gate has a limit stop (14a, 15b) for the selector lever (2) in the gearshift position D, wherein the limit stop can be overcome through movement of the selector lever (2) along its longitudinal axis, as a result of which the selector lever (2) can be moved from the gearshift position D into the further gearshift position M and back out of this position.

2. A gearshift system according to claim 1, characterised in that the limit stop is provided at one end section (15) of the gearshift gate, the front face of which serves as a limit stop shoulder (15b) for a T-shaped extension (14) arranged on the selector lever (2).

3. A gearshift system according to claim 2, characterised in that the end section (15) has a catch hook-like transverse profile with an undercut recess (15a) in which the T-shaped extension (14) in the gearshift position for manual gear-shifting can be moved forwards and backwards over a limited distance in the direction of the gearshift gate.

4. A gearshift system according to claim 3, characterised in that the T-shaped extension (14) extends approximately perpendicular to the selector lever (2) and engages with its upward-pointing transverse bar section (14b) in the manual gearshift position in the undercut recess (15a) and that the selector lever (2) can be moved out of the gearshift position D into the manual gearshift position by downward pressure and vice versa.

5. A gearshift system according to claim 4, characterised in that the lower transverse bar section (14c) of the T-shaped extension (14) acts in conjunction with a stepped projection (8a) of the gearshift gate (8) serving as a limit stop.

6. A gearshift system according to any one of claims 1 to 5, characterised in that in the manual gearshift position the selector lever (2) actuates electrical switches (16) for the initiation of a change of gear.

7. A gearshift system according to any one of claims 1 to 6, characterised in that the selector lever in the manual gearshift position is forced into a central position under the action of a spring.

8. A gearshift system according to claim 7, characterised in that a springloaded latching mechanism (17) arranged on the automatic gearbox returns the selector lever (2) to its central position.

## Revendications

1. Dispositif de commande pour un véhicule à moteur avec une boîte de vitesses automatique, qui présente un levier de sélection (2), que l'on peut mettre à l'intérieur d'une voie de commande s'étendant sensiblement dans le sens longitudinal du véhicule dans les différentes positions de commande P, R, N, D, et faire passer dans une autre position de commande M dans laquelle on peut commander manuellement pas à pas le passage des vitesses en marche avant et qui se trouve dans un prolongement de la voie de commande, le levier de sélection pouvant être mis, le long d'une coulisse de commande fixe, dans les différentes positions de commande,
caractérisé en ce que
la coulisse de commande présente une butée (14a, 15b) pour le levier de sélection (25) qui se trouve dans la position D, la butée pouvant être surmontée par le mouvement du levier de sélection (2) suivant son axe longitudinal, ce qui permet de faire passer le levier de sélection (2) de la position de commande D dans la position de commande suivante M, et de le ramener en arrière à partir de celle-ci.

2. Dispositif de commande selon la revendication 1,
caractérisé en ce que
la butée est prévue sur une section terminale (15) de la coulisse de commande, dont le côté frontal sert d'épaulement de butée (15b) à un prolongement (14) en forme de T qui est disposé sur le levier de sélection (2).

3. Dispositif de commande selon la revendication 1,
caractérisé en ce que
la section terminale (15) présente un profil à section transversale en forme de crochet d'arrêt avec un évidement (15a) présentant une contredépouille, évidement (15a) dans lequel on peut faire avancer et reculer le prolongement en forme de T (14), dans la position de commande qui correspond à la commande manuelle, d'une longueur limitée dans le sens de la voie de commande.

4. Dispositif de commande selon la revendication 3,
caractérisé en ce que
• le prolongement (14) en forme de T part du levier de sélection (2) à peu près perpendiculairement et vient en prise dans l'évidement (15a) qui présente une contre-dépouille, par la section (14b) de sa traverse dirigée vers le haut, dans la position de commande manuelle, et
• on peut faire sortir le levier de sélection (2) de sa position de commande D en le pressant vers le bas pour l'amener dans la position de commande manuelle et inversement.

5. Dispositif de commande selon la revendication 4,
caractérisé en ce que
la section (14c) de la traverse du prolongement (14) en forme de T coopère avec un ressaut (8a) de la coulisse de commande (8), qui sert de butée.

6. Dispositif de commande selon l'une des revendications 1 à 5,
caractérisé en ce que
le levier de sélection (2) actionne, dans la position de commande manuelle, des contacteurs électriques (16) qui servent à initier le changement de vitesses.

7. Dispositif de commande selon l'une des revendications 1 à 6,
caractérisé en ce que
le levier de sélection se trouvant dans la position de commande manuelle, est ramené dans une position centrale en étant comprimé par un ressort.

8. Dispositif de commande selon la revendication 7,
caractérisé en ce qu'
un encliquetage (17) comprimé par un ressort et disposé sur la boîte de vitesses automatique, ramène le levier de sélection (2) dans sa position centrale.
